# EUROPEAN PATENT APPLICATION

(11) **EP 1 489 535 A1**
(43) Date of publication of application: **22.12.2004**
(21) Application number: 02707145.5
(22) Date of filing: 25.03.2002
(51) Int. Cl.: G06F 17/60

(54) **CASH AUTOMATIC DEALING SYSTEM**

(71) Applicant: FUJITSU LIMITED, Kawasaki-shi, Kanagawa 211-8588 (JP)
(72) Inventor: OHARA, Yoji, Maebashi-shi, Gunma 371-0855 (JP)
(74) Representative: Hitching, Peter Matthew
(86) International application number: PCT/JP2002/002858
(87) International publication number: WO 2003/081495

(57) **Abstract**

An automated cash transaction system that provides enhanced convenience for both customers and financial institutions by utilizing a mobile telephone and a computer network. The automated cash transaction system includes: a server which is connected to the computer network, and which distributes a transaction processing program for allowing the mobile telephone to carry out processing at least for user authentication and communications with an automated cash transaction machine; the mobile telephone which receives the transaction processing program from the server via the computer network, stores the received transaction processing program, and carries out the processing for user authentication and communications with the automated cash transaction machine in accordance with the transaction processing program; and the automated cash transaction machine which carries out automated cash transaction processing based on data entered through communications with the mobile telephone.

## Description

### TECHNICAL FIELD

The present invention relates to a system for automatically executing cash-related transactions through automated cash transaction machines installed in financial institutions such as banks.

### BACKGROUND ART

Automated cash transaction machines, such as cash dispensers (CDs) and automated teller machines (ATMs), installed in banks and other financial institutions permit customers to carry out transactions using their magnetic cards and/or passbooks issued by the respective financial institutions.

In these circumstances, if a user has accounts with a plurality of financial institutions, the user must have a magnetic card, a passbook, etc. for each account. In this case, if the user wishes to be able to use automated cash transaction machines anytime anywhere, the user has to always carry the plurality of magnetic cards, etc. with him.

Further, even in busy hours, all transaction operations, including fund transfers that require time-consuming data input operations, have to be performed on the automated cash transaction machine, and this has led to a reduction in the working efficiency of the automated cash transaction machine.

Moreover, when a financial institution such as a bank intends to add a new function (transaction function) to its automated cash transaction machines, internal software has to be modified and, if the modified software is to be installed on all the automated cash transaction machines operated by the financial institution, an enormous amount of time and cost will be required.

Japanese Unexamined Patent Publication (KOKAI) No. 11-338942 proposes that items of transaction information to be entered on an'automated cash transaction machine be input in advance into a mobile telephone and be transmitted from the mobile telephone to the automated cash transaction machine, in an attempt to simplify the data entry operations on the automated cash transaction machine and thereby increase the capacity utilization thereof. However, the above-cited document only assumes that a program for implementing such transactions is stored in the mobile telephone at the time of purchase or as needed, and does not provide any specific method for implementation.

### DISCLOSURE OF THE INVENTION

The present invention has been devised in view of the above problem, and an object of the invention is to provide an automated cash transaction system that offers enhanced convenience for both customers and financial institutions by utilizing the rapidly spreading and advanced mobile telephone and computer network technologies.

According to a first aspect of the present invention, there is provided an automated cash transaction system comprising: a server which is connected to a computer network, and which distributes a transaction processing program for allowing a mobile telephone to carry out processing at least for user authentication and communications with an automated cash transaction machine; the mobile telephone which receives the transaction processing program from the server via the computer network, stores the received transaction processing program, and carries out the processing for user authentication and communications with the automated cash transaction machine in accordance with the transaction processing program; and the automated cash transaction machine which carries out automated cash transaction processing based on data entered through communications with the mobile telephone.

According to a second aspect of the present invention, the transaction processing program is preferably a Java program.

According to a third aspect of the present invention, preferably, the mobile telephone receives different transaction processing programs from different servers and stores the received transaction processing programs.

According to a fourth aspect of the present invention, preferably, the transaction processing program allows the mobile telephone to also carry out processing for pre-entering transaction data necessary to carry out transaction processing, and the mobile telephone transmits the pre-entered transaction data to the automated cash transaction machine.

According to a fifth aspect of the present invention, preferably, the transaction processing program allows the mobile telephone to also carry out processing for effecting a new function of the automated cash transaction machine.

### BRIEF DESCRIPTION OF THE DRAWINGS

Figure 1 is a diagram showing the configuration of an automated cash transaction system according one embodiment of the present invention.
Figure 2 is a flowchart showing the sequence of operations performed when opening an account and updating software.
Figures 3A and 3B are a flowchart showing the sequence of operations performed for a withdrawal transaction.
Figures 4A and 4B are diagrams each showing an example of a screen displaying the result of a transaction on a mobile telephone.

### BEST MODE FOR CARRYING OUT THE INVENTION

To describe the present invention in further detail, the best mode contemplated for carrying out the invention will be described with reference to the accompanying drawings.

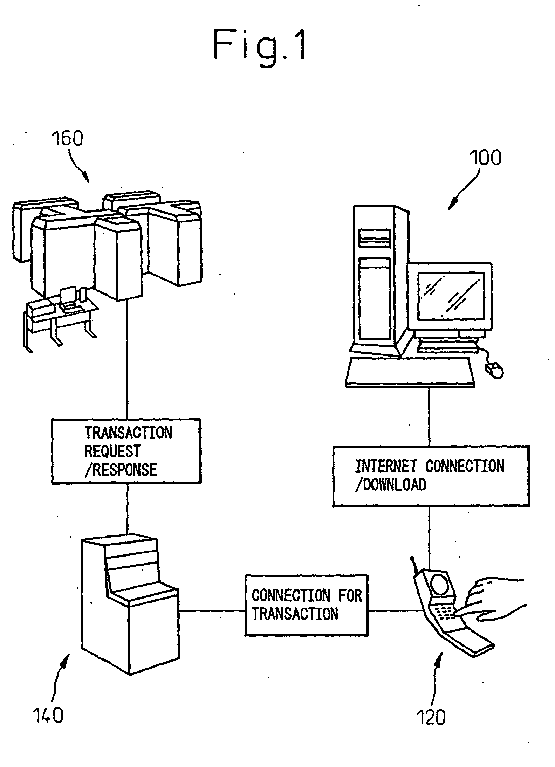

Figure 1 shows one embodiment of an automated cash transaction system according to the present invention. Referring to the figure, reference numeral 100 is a Java program distribution server on the Internet, 120 is a mobile telephone connectable to the Internet and capable of executing a JAVA program, 140 is an automated cash transaction machine such as a cash dispenser (CD) or an automated teller machine (ATM), and 160 is a host computer of a financial institution.

As is known, programs written in Java, a programming language, can be run on any platform (the operating system and computer hardware as seen from a running application), and Java-equipped mobile telephones (mobile telephones equipped with Java functions) are wide-spread.

In the present embodiment, the user connects to the Java program distribution server 100 by using the mobile telephone 120, opens an account with the financial; institution which is, for example, a bank, and downloads a Java program as a transaction processing program onto the mobile telephone 120 from the server 100. The downloaded Java program contains all necessary data for automated cash transaction operations, such as magnetically stored data (MS data) and account number which traditionally were held on a magnetic card or a passbook.

Authentication prior to the initiation of a transaction is performed by activating the Java program and entering a personal identification number on the mobile telephone 120; this prevents any person other than the authorized user from activating the Java program and using the mobile telephone as a magnetic card. After the authentication has been done successfully, the user connects the mobile telephone 120 to the automated cash transaction machine 140 and performs communications to carry out a transaction such as a cash withdrawal or fund transfer.

Such functions can be effected for transactions with a plurality of financial institutions. That is, by downloading Java programs of different financial institutions onto one mobile telephone and opening accounts with the respective financial institutions, the functions of the magnetic cards and passbooks of the different financial institutions can be incorporated into one mobile telephone.

Furthermore, the Java program can be designed to perform not only the authentication function but also the ensuing transaction process up to the step just before the transmission of a transaction request message to the financial institution's host 160. That is, if the transaction process, including, for example, the entry of the type of transaction, the amount of money, etc., can be performed beforehand, the transaction can be accomplished quickly even in busy hours by just connecting the mobile telephone 120 to the automated cash transaction machine 140.

Among others, a fund transfer transaction that requires the entry of various kinds of data tends to lengthen the time that one user occupies the automated cash transaction machine 140. If all the necessary data are input beforehand into the Java program on the mobile telephone 120 so that the mobile telephone 120 need only be connected to the automated cash transaction machine 140, the time that one user occupies the automated cash transaction machine 140 can be greatly reduced, which contributes to increasing the working efficiency of the automated cash transaction machine 140.

Further, when the need arises to add a new function (transaction function) to the automated cash transaction machine 140, the financial institution need only modify the Java program having the above-described transaction process, rather than modifying the internal software of the automated cash transaction machine as has traditionally been the case, and have the user download the modified Java program; this serves to greatly reduce the time and cost required to install the modified software at the financial institution. Furthermore, since provisions are made to allow the user to download the software, not only can the software be updated easily, but also the time required for the update to take effect can be reduced; as a result, a transaction having a limited-time function, such as a marketing campaign, can be easily effected.

A specific example of the operation according to the present embodiment will be described below with reference to a flowchart.

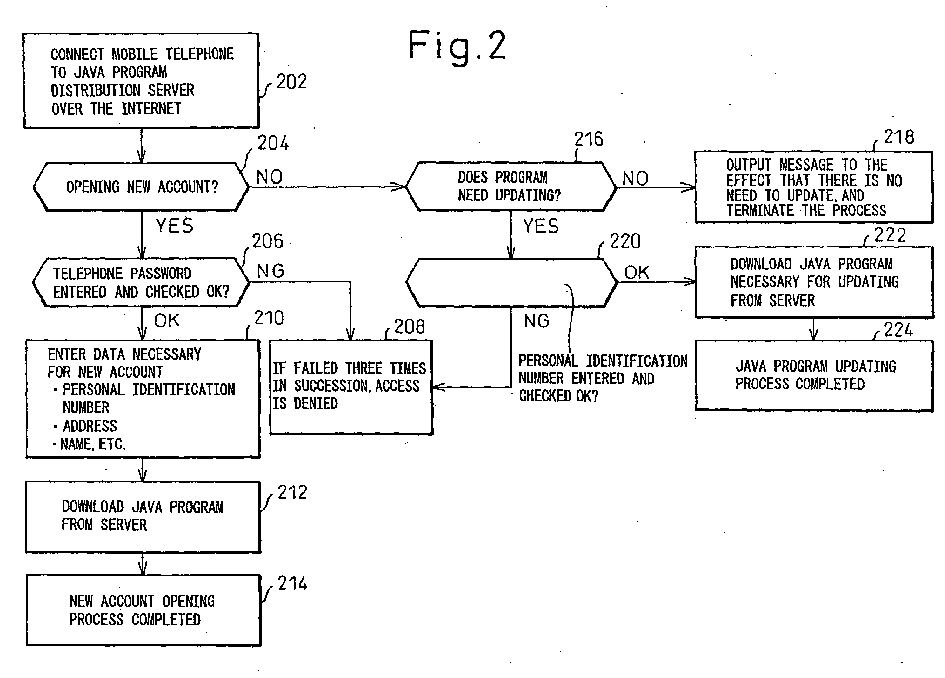

Figure 2 is a flowchart showing the sequence of operations performed when opening an account and updating software. First, in step 202, the user connects the mobile telephone 120 to the Java program distribution server 100 over the Internet.

Next, in step 204, it is determined whether or not the user intends to open a new account; if the user intends to open a new account, the process proceeds to step 206 where the password entered by the user is checked to determine whether it matches the correct password originally given to the mobile telephone under the management of the mobile telephone company.

If the correct password is not entered, the process proceeds to step 208 to retry the entry. If the attempt at entering the correct password has failed three times in succession, the access is denied.

On the other hand, when the correct password is entered, the process proceeds to step 210 where data necessary for the new account, that is, personal identification number, address, name, etc., are entered.

The process next proceeds to step 212 to download the Java program from the server 100 onto the mobile telephone 120. The program contains MS data, account number, passbook functions, transaction process, etc. Then, the process proceeds to step 214 to complete the new account opening and registration process.

If, in step 204, it is determined that the user does not intend to open a new account, the process proceeds to step 216 to check whether the Java program previously downloaded needs updating. If it is determined that there is no need to update, the process proceeds to step 218 where a message to the effect that there is no need to update is output, and the process is terminated.

On the other hand, if it is determined that there is a need to update the program, the process proceeds to step 220 where the personal identification number entered by the user is checked to see if it matches the registered personal identification number. If the correct personal identification number is not entered, the process proceeds to step 208 to retry the entry; if the attempt at entering the correct personal identification number has failed three times in succession, the access is denied.

On the other hand, when the correct personal identification number is entered, the process proceeds to step 222 where the Java program necessary for updating is downloaded from the server 100 onto the mobile telephone 120. Then, the process proceeds to step 224 to complete the updating of the Java program.

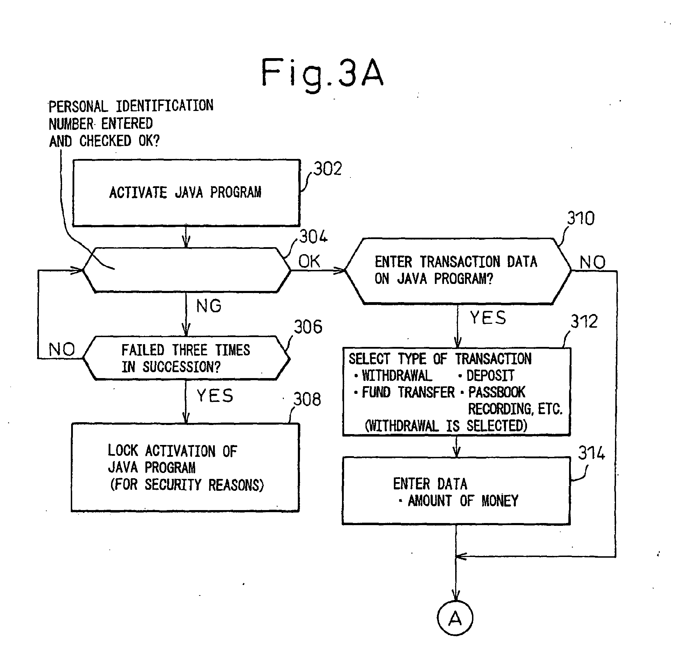

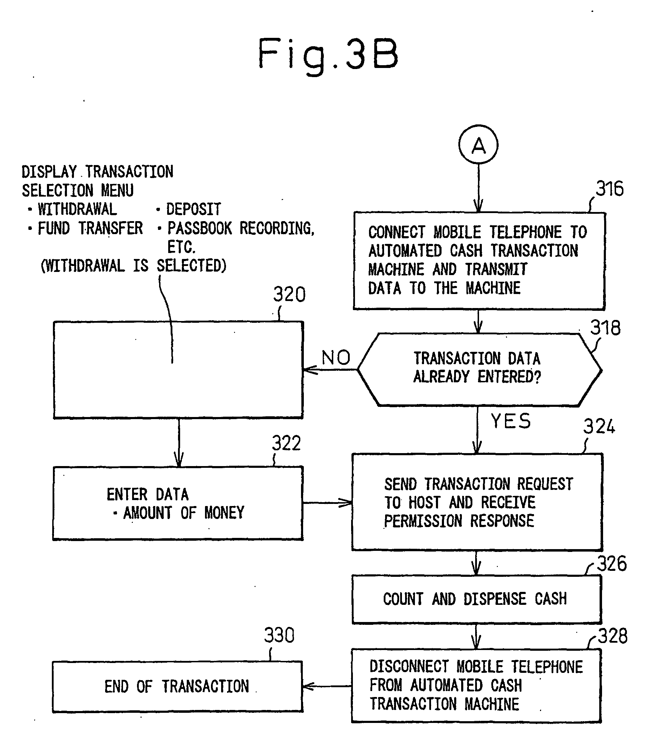

Figures 3A and 3B are a flowchart showing the sequence of operations performed for a withdrawal transaction. Steps 302 to 314 are carried out on the mobile telephone 120, while steps 316 to 330 are carried out on the automated cash transaction machine 140.

First, in step 302, the Java program is activated on the mobile telephone 120. Next, in step 304, an authentication process is performed by the Java program to determine whether or not the personal identification number entered by the user matches the registered personal identification number.

If the correct personal identification number is not entered, the process proceeds to step 306 to check if the attempt at entering the correct personal identification number has failed for the third time or not; if it is not the third attempt, that is, if it is the first or the second attempt, the process returns to step 304.

If an incorrect personal identification number has been entered three times in succession, the process proceeds to step 308 where the activation of the Java program is locked for security reasons.

If the authentication by the personal identification number has been completed successfully in step 304, the process proceeds to step 310 where an inquiry is made to the user as to whether the user desires to enter transaction data in the Java program. If a response is made to the effect that the user does not wish to enter transaction data in the Java program, the process proceeds to step 316.

On the other hand, if a response is made to the effect that the user desires to enter transaction data in the Java program, the process proceeds to step 312 where a message prompting to select the type of transaction, such as withdrawal, deposit, fund transfer, and passbook recording, is displayed on the screen, and the selected transaction is executed. In the illustrated example, withdrawal is selected, and data relating to it, i.e., the amount of money to be withdrawn, is entered in step 314.

The processing on the mobile telephone 120 is thus completed, and the processing on the automated cash transaction machine 140 takes over. First, in step 316, the mobile telephone 120 is connected to the automated cash transaction machine 140. This connection may be a wired connection or a wireless connection; transmit/receive circuits, connectors, etc. for establishing the connection are provided on both sides.

via the thus established connection, necessary data, such as the personal identification number, MS data, account number, and transaction data, if pre-entered, are transmitted from the mobile telephone 120 to the automated cash transaction machine 140.

Next, in step 318, it is checked to see whether transaction data has already been entered on the mobile telephone 120. If transaction data is not yet entered, the process proceeds to step 320; on the other hand, if transaction data has already been entered, the process proceeds to step 324.

In step 320, a message prompting to select the type of transaction, such as withdrawal, deposit, fund transfer, and passbook recording, is displayed on the screen of the automated cash transaction machine 140, and the selected transaction is executed. In the illustrated example, withdrawal is selected, and data relating to it, i.e., the amount of money to be withdrawn, is entered in step 322, after which the process proceeds to step 324.

In step 324, a transaction request is sent from the automated cash transaction machine 140 to the host computer 160, and a permission response is received.

Then, in step 326, cash is counted and dispensed from the automated cash transaction machine 140 and, in step 328, the mobile telephone 120 is disconnected from the automated cash transaction machine 140.

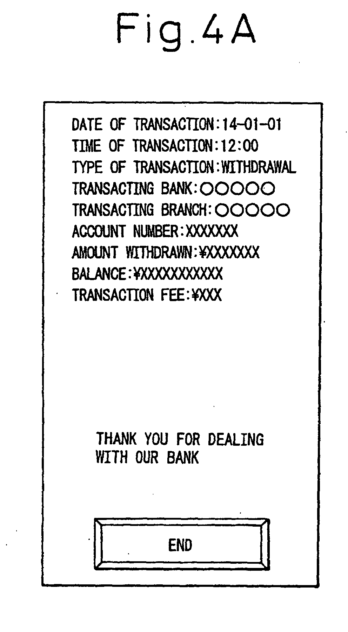

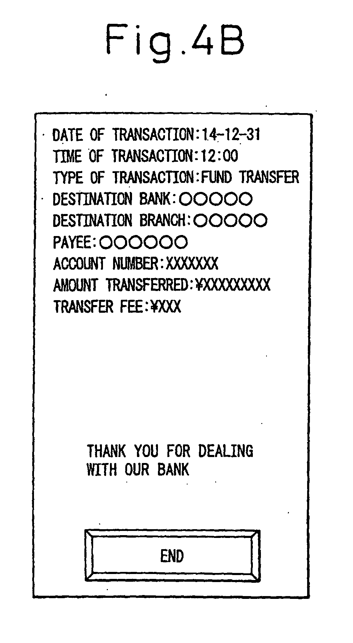

When the disconnection is made, a screen indicating the result of the transaction, such as shown in Figure 4A or 4B, is displayed on the mobile telephone 120. Here, Figure 4A shows an example for the case of a withdrawal transaction, and Figure 4B shows an example for the case of a fund transfer transaction. If the data cannot be shown in its entirety on the screen of the mobile telephone, the remaining portion of the data can be viewed by scrolling the screen. In step 330, the transaction is terminated.

As described above, according to the present invention, the Java program downloaded to the mobile telephone has the functions of the traditional magnetic card or passbook and serves the same purpose as the magnetic card or the passbook. It is also possible to incorporate the functions of the magnetic cards and passbooks of a plurality of banks into one mobile telephone.

Further, if a transaction process, such as the entry of data that becomes necessary when performing a transaction, is included in the program, the time required for the customer to perform operations on the automated cash transaction machine (machine occupancy time) can be greatly reduced, achieving high working efficiency of the machine.

Furthermore, with provisions made to carry out the transaction process such as the entry of data on the mobile telephone, a software modification to embrace a new function (transaction function) can be accomplished by modifying the Java program to be downloaded to the mobile telephone, rather than modifying the internal software of the machine as has traditionally been the case; as a result, not only can the program be delivered speedily, but it also becomes possible to add a timely function (for example, for a limited-time marketing campaign).

## Claims

1. An automated cash transaction system comprising:
a server which is connected to a computer network, and which distributes a transaction processing program for allowing a mobile telephone to carry out processing at least for user authentication and communications with an automated cash transaction machine;
said mobile telephone which receives said transaction processing program from said server via said computer network, stores said received transaction processing program, and carries out said processing for user authentication and communications with said automated cash transaction machine in accordance with said transaction processing program; and
said automated cash transaction machine which carries out automated cash transaction processing based on data entered through communications with said mobile telephone.

2. An automated cash transaction system as claimed in claim 1, wherein said transaction processing program is a Java program.

3. An automated cash transaction system as claimed in claim 1, wherein said mobile telephone receives different transaction processing programs from different servers and stores said received transaction processing programs.

4. An automated cash transaction system as claimed in claim 1, wherein said transaction processing program allows said mobile telephone to also carry out processing for pre-entering transaction data necessary to carry out transaction processing, and wherein said mobile telephone transmits said pre-entered transaction data to said automated cash transaction machine.

5. An automated cash transaction system as claimed in claim 1, wherein said transaction processing program allows said mobile telephone to also carry out processing for effecting a new function of said automated cash transaction machine.
